# EUROPEAN PATENT APPLICATION

(11) **EP 4 421 117 A1**
(43) Date of publication of application: **28.08.2024**
(21) Application number: 23157698.4
(22) Date of filing: 21.02.2023
(51) Int. Cl.: C08K 3/26, C08K 3/34, C08K 5/00, C08K 5/14

(54) **ORGANIC PEROXIDE COMPOSITION**

(71) Applicant: Nouryon Chemicals International B.V., 1101 BZ Amsterdam (NL)
(72) Inventor: FRIJLINK, Wilhelm Klaas, 1101 BZ Amsterdam (NL); VAN DER AA, Paulus Petrus Henricus Maria, 1101 BZ Amsterdam (NL)
(74) Representative: LKGlobal UK Ltd.

(57) **Abstract**

The present disclosure relates to an organic peroxide composition in solid form comprising
a) at least one organic peroxide of the formula 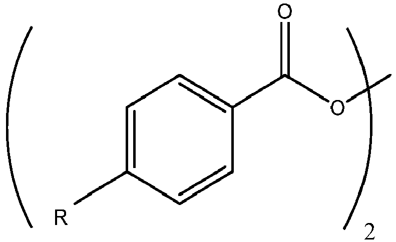 wherein each R is individually selected from C₁₋₅ alkyl groups;
b) at least one water retaining agent that is a solid at room temperature; and
c) water.

## Description

### Technical Field

The invention relates to an organic peroxide composition in solid form and its use in a process for producing high melt strength polypropylene (HMS-PP).

### Background

Processes for improving the melt strength of polypropylene using a peroxide are known in the art. The treatment with peroxide creates long chain branches. The more long chain branches, the higher the melt strength.

For instance, WO 99/027007 discloses a process which involves thermal treatment of polypropylene with a peroxydicarbonate. Several peroxydicarbonates are disclosed in this document, including dicetyl peroxydicarbonate, dimyristyl peroxydicarbonate, and di(4-tert-butylcyclohexyl) peroxydicarbonate.

The advantages of these particular dialkyl peroxydicarbonates are, apart from their good performance in the process, their safety aspects and ease of handling. All of them are in solid form and - in contrast to many other peroxydicarbonates - can be safely stored and handled at room temperature. In addition, they can be used in an extrusion process.

High melt strength polypropylene (HMS-PP) finds use in food packaging and automotive applications. At higher temperatures, the decomposition product of the dialkyl peroxydicarbonate - i.e. alcohols such as cetyl alcohol, myristyl alcohol, and 4-tert-butylcyclohexanol - tend to evaporate from the HMS-PP and condense on other surfaces, thereby forming a fogged surface with reduced visual transparency. This phenomenon is called fogging.

For example, as a result of heating an HMS-PP based food package in a microwave, the alcoholic decomposition product may evaporate and condense on the package's lid or the microwave window, thereby negatively affecting their transparency.

HMS-PP used in automotive interiors may heat up at warm weather conditions and the alcoholic decomposition product may condense on the car windows, with the evidently undesired result of reduced visibility.

The decomposition products of dicetyl and dimyristyl peroxydicarbonates also tend to migrate to the surface of the modified polypropylene. This phenomenon is called "blooming" and leads to the formation of white or glittering particles on the surface, resulting in a non-uniform appearance of the polymer surface.

WO 99/36466 and WO 2019/038244 disclose processes for increasing the melt strength of polypropylene. As noted in WO 2019/038244, using the specific peroxides disclosed therein resulted in higher melt strengths than the use of, e.g., dicetyl peroxydicarbonate, dibenzoylperoxide, and ortho-substituted dibenzoyl peroxide (as used in WO 99/36466). This improvement can be directly attributed to the use of those specific peroxides in combination with an inert atmosphere in the extruder.

Whilst the process of WO 2019/038244 does indeed produce polypropylene products with excellent melt strength properties, it is not always practical or desirable to use an inert environment in the extruder. For example, in polypropylene plastic recycling it is preferable if an inert environment can be avoided (to minimize the overall complexity and cost of the process).

Through empirical studies by the inventors, it has been found that switching from an inert to a non-inert atmosphere in the extruder (i.e., air instead of an inert atmosphere) whilst using the organic peroxides of WO 2019/038244 still produced a polypropylene product with melt strength properties that outperform the organic peroxides used in WO 99/36466 (under the same process conditions). However, under non-inert extrusion conditions the produced polypropylene product was discoloured (i.e., yellowing instead of white), showed signs of degradation, and had inferior melt strength properties to those produced under an inert atmosphere, none of which are desirable outcomes.

Additionally, the preferred organic peroxide formulations used in WO 2019/038244 contained substantial amounts of water. Whilst such organic peroxide formulations are generally safe to use (with appropriate training), they are not without safety complications. Specifically, when dosed to an extruder, there is always the potential for unintended spillage of the formulation onto the extruder apparatus. Should that happen, then the water (phlegmatizer) will quickly evaporate, thereby increasing the concentration of the peroxide to the point where the peroxide can become friction and impact sensitive. In the event of that happening, the chance of explosion is significantly increased, which is clearly something to be avoided (especially on an industrial scale). This issue makes handling such organic peroxide formulations somewhat hazardous and challenging.

In view of this, there remains a need for an organic peroxide composition that generates polypropylene products under non-inert extrusion conditions whilst maintaining the excellent polypropylene properties of WO 2019/038244 and whilst avoiding the safety hazards and handling issues noted above.

### Description

In a first aspect, the present disclosure relates to an organic peroxide composition that is in solid form (preferably in the form of solid flakes) and which comprises:
a) at least one organic peroxide of the formula 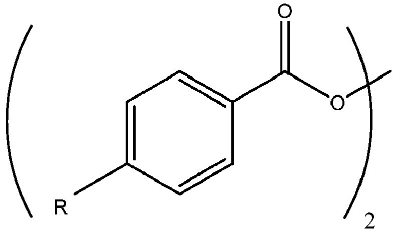 wherein each R is individually selected from C₁₋₅ alkyl groups;
b) at least one water retaining agent that is a solid at room temperature; and
c) water.

An unexpected finding was that by including water and a water retaining agent in the organic peroxide composition, it was no longer essential to use an inert environment in the extruder (i.e., the performance of the peroxide was unaffected by the type of atmosphere used). The polypropylene products also showed no obvious signs of polypropylene degradation, and no discoloration of the product was observed (i.e., a white product was obtained). Furthermore, the organic peroxide composition disclosed herein was found to be much safer and easier to handle than the preferred organic peroxide formulations of WO 2019/038244. Thus, all of the above technical issues have been solved by the organic peroxide composition disclosed herein. Accordingly, the organic peroxide composition disclosed herein is an excellent candidate for use in polypropylene plastic recycling.

The organic peroxide composition disclosed herein is in solid form. There are many suitable solid forms for the organic peroxide composition, such as, but not necessarily limited to, powders, granules, flakes, etc. Preferably, the organic peroxide composition is in the form of solid flakes, as the solid flakes have been found to be chemically stable and easier to dose than powders, hence much safer and easier to add to the extruder.

The organic peroxide composition comprises as a first essential component a) at least one organic peroxide selected from those of the formula 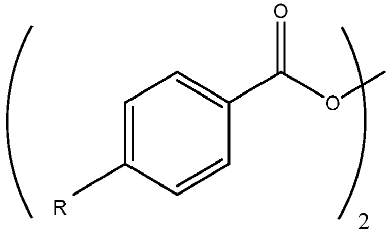 wherein each R is located at the para-position of the aromatic ring and is individually selected from C₁₋₅ alkyl groups.

In a preferred embodiment, each R is individually selected from C₁₋₅ alkyl groups. Examples of such groups are methyl, ethyl, n- propyl, i-propyl, n-butyl, sec-butyl, tert-butyl, and tert-amyl.

More preferably, at least one R is methyl.

Most preferably, the organic peroxide is di(para-methylbenzoyl) peroxide (i.e., each R is methyl).

Preferably, the organic peroxide composition comprises from 40-75 wt.%, preferably from 45-70 wt.%, more preferably from 50-65 wt.% of the at least one organic peroxide as described above (wt.% based on the total weight of the organic peroxide composition).

The organic peroxide composition comprises as a second essential component b) at least one water retaining agent that is a solid at room temperature. A "water retaining agent" is an agent that retains water in the composition, and the test for determining whether an agent is an acceptable "water retaining agent" for use in the presently disclosed compositions is set out in the worked examples below. "Solid at room temperature" has its ordinary meaning, i.e., a solid at 25°C and 1 atmosphere. It was found that retaining water in the solid organic peroxide composition was critical to successfully producing a polypropylene product by extrusion under a non-inert atmosphere with the same desirable technical properties of the polypropylene products produced by the process of WO 2019/038244. Water retaining agents suitable for use in chemical compositions are readily available to the skilled person. Examples of suitable water retaining agents include, but are not necessarily limited to:
- anionic clays, such as, but not limited to, synthetic and natural layered double hydroxides including, but not limited to, natural and synthetic hydrotalcites;
- water absorbing polymers, such as, but not limited to, acrylic-based water absorbing polymers (e.g. poly(meth)acrylic acids, polyacrylamides, etc.), polyvinylalcohol-based water absorbing polymers, polyethylene glycol-based water absorbing polymers, polysaccharide-based water absorbing polymers (e.g., water absorbing polymers based native or modified starch, native or modified cellulose [notably carboxymethyl celluloses], native or modified cyclodextrins, native or modified guar gums, etc.), polyamide-based water absorbing polymers (e.g., polyaspartic acid);
- metal carbonates and metal bicarbonates, such as, but not limited to, Ca, Mg, Zn, Na, K, or Li carbonate, or Na, K, or Li bicarbonate;
- metal oxides, such as, but not limited to, CaO, MgO, and ZnO;
- metal silicates, such as, but not limited to, calcium silicate or magnesium silicate;
- hydrophilic silicas; and
- metal sulfate drying agents, such as, but not limited to, sodium sulfate, barium sulfate, and magnesium sulfate.

Preferred water retaining agents comprise or consist of at least one anionic clay. Anionic clays have a crystal structure comprising positively charged layers built up of combinations of divalent and trivalent metal hydroxides between which there are anions and water molecules. Hydrotalcite is an example of a naturally occurring anionic clay, in which carbonate is the predominant anion and the layers contain Mg and Al. Various natural, synthetic, and modified forms with other di- and/or trivalent metals and/or anions (including nitrate anions, organic anions and pillaring anions) are known and suitable for use in the compositions disclosed herein. Preferred anionic clays are anionic clays with carbonate or hydroxide anions in the interlayers. It has been found that the anionic clays are particularly effective in the presently disclosed compositions, such as the naturally occurring and synthetic hydrotalcites, for example aluminum magnesium hydroxide carbonate.

Preferably, the organic peroxide composition comprises from 1-30 wt.%, preferably from 3-20 wt.%, more preferably from 5-15 wt.% of the at least one water retaining agent (wt.% based on the total weight of the organic peroxide composition).

The organic peroxide composition comprises as a third essential component c) water. Preferably, the organic peroxide composition comprises from 5-30 wt.%, preferably from 10-25 wt.%, more preferably from 15-20 wt.% water (wt.% based on the total weight of the organic peroxide composition).

Other additives conventionally used in organic peroxide compositions may also be included in the organic peroxide composition disclosed herein. These conventional additives typically account for about 5-20 wt.% of the organic peroxide composition. Preferred additives include stabilizers, such as (but not limited to) one or more antioxidants, for example primary antioxidants, e.g. phenolic types, and/or secondary antioxidants, e.g. phosphite, sulphite types (such as Irganox^{®} 1010 [phenolic; pentaerythritol tetrakis(3-(3,5-di-tert-butyl-4-hydroxyphenyl)propionate)] and/or Irgafos 168 [phosphite; tris(2,4-di-tert-butylphenyl)-phosphite], both of which are available from BASF^{®}).

In a preferred embodiment, the organic peroxide composition in solid form (preferably in solid flake form) comprises
a) 40-75 wt.% of at least one organic peroxide of the formula 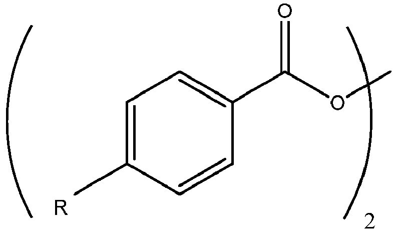 wherein each R is individually selected from C₁₋₅ alkyl groups;
b) 1-30 wt.% of at least one water retaining agent that is a solid at room temperature;
c) 5-30 wt.% water; and
d) optionally 5-20 wt.% of at least one antioxidant.

In a more preferred embodiment, the organic peroxide composition in solid form (preferably in solid flake form) comprises
a) 40-75 wt.% of at least one organic peroxide of the formula 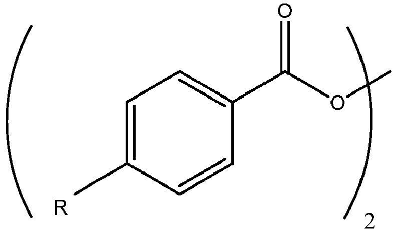 wherein each R is individually selected from C₁₋₅ alkyl groups;
b) 1-30 wt.% of at least one water retaining agent that is a solid at room temperature, selected from anionic clays;
c) 5-30 wt.% water; and
d) optionally 5-20 wt.% of at least one antioxidant, preferably at least one primary antioxidant and/or at least one secondary antioxidant.

In a more preferred embodiment, the organic peroxide composition in solid form (preferably in solid flake form) comprises
a) 40-75 wt.% of di(para-methylbenzoyl) peroxide;
b) 1-30 wt.% of at least one water retaining agent that is a solid at room temperature, selected from hydrotalcites;
c) 5-30 wt.% water; and
d) optionally 5-20 wt.% of at least one antioxidant, preferably at least one phenolic-type antioxidant and/or at least one phosphite or sulphite type antioxidant.

In a further preferred embodiment, the organic peroxide composition in solid form (preferably in solid flake form) comprises
a) 40-75 wt.% of di(para-methylbenzoyl) peroxide;
b) 1-30 wt.% of at least one water retaining agent that is a solid at room temperature, selected from Mg/AI hydrotalcites;
c) 5-30 wt.% water; and
d) 5-20 wt.% of at least one antioxidant, preferably at least one phenolic-type antioxidant and/or at least one phosphite or sulphite type antioxidant.

In a second aspect, the present disclosure relates to a process for enhancing the melt strength of polypropylene by extruding said polypropylene in an extruder, at a temperature between 150°C and 300°C, and in the presence of an organic peroxide composition in solid form as described above.

The organic peroxide composition is added to the polypropylene prior to or during extrusion. The quantity of organic peroxide composition to be used will depend on the desired degree of modification and on the type of polypropylene employed. Preferably, the amount of organic peroxide composition used is such that the concentration of the at least one organic peroxide a) is in the range of 0.1 to 5.0 g of peroxide per 100 g polypropylene, more preferably in the range of 0.5 to 3.0 g per 100 g polypropylene.

Preferably, the extrusion is performed at a temperature in the range 155-250°C, more preferably 160-240°C.

The polypropylene can be a homopolymer of propylene or a random, alternating, heterophasic, or block co- or terpolymer of propylene and other olefins. Generally, a propylene copolymer or terpolymer will contain one or more other olefins, such as ethylene, butene, pentene, hexene, heptene, or octene, but it may also comprise styrene or styrene derivatives. The content of olefins other than propylene is preferably not more than 30 wt% of all monomers.

Polypropylene homopolymers and copolymers of propylene and ethylene are most preferred. It is also possible to use mixtures of polypropylene and polyethylene, such as polyolefins recycle streams.

The melting point of commercially available propylene homopolymer is about 160-170°C. The melting point of propylene copolymers and terpolymers is generally lower.

The molecular weight of the polypropylene used can be selected from a wide range. Indicative of the molecular weight is the melt flow index (MFI). Use may be made of a polypropylene having a MFI from 0.1 to 1000 g/10 min (230°C, 21.6 N). Preferably, use is made of a polypropylene having a MFI from 0.5 to 250 g/10 min.

The polypropylene may be a branched polypropylene, such as described in WO 2016/126429 and WO 2016/126430.

Extrusion allows modification of the polypropylene to be combined with pelletization. Use is made of a single screw extruder or a twin screw extruder. Twin screw extruders are preferred because they more thoroughly homogenize the peroxide within the polypropylene. The residence time in the extruder is generally about 10 seconds to about 5 minutes.
The screw speed of the extruder is preferably in the range 25-1000 rpm. The temperature of the extruder should be above the melting temperature of the polypropylene.

The process can be carried out as a batch process, a continuous process, or a combination thereof. A continuous process is preferred.

During extrusion, vacuum or atmospheric degassing may be applied in order to remove volatile decomposition products and any water introduced as part of the peroxide formulation.

Extrusion may be conducted in the presence of a co-agent in order to influence the melt flow index of the polypropylene and/or to enhance the degree of modification. Examples of coagents are TMAIC (trimethallyl isocyanurate), TAIC (triallyl isocyanurate), TAC (triallycyanurate), TRIM (trimethylol propane trimethacrylate), divinylbenzene, HVA-2 (N,N'phenylene bismaleimide), AMSD (alpha methyl styrene dimer), and Perkalink 900 (1,3-bis(citraconimidomethyl)benzene).

A co-agent is generally understood to be a polyfunctional reactive additive such as a polyunsaturated compound which will react rapidly with polymer radicals, will overcome steric hindrance and minimize undesirable side reactions. The incorporation of an effective amount of one or more of these co-agents into the polypropylene, prior to or during the process of the present invention tends to influence the melt flow index and molecular weight of the resulting polypropylene.

If so desired, conventional adjuvants, in an amount known to one skilled in the art, such as antioxidants, UV-stabilizers, lubricants, antidegradants, foaming agents, nucleating agents, fillers, pigments, acid catchers (e.g. calcium stearate), and/or antistatic agents may be added to the polypropylene. These adjuvants can be added to the polypropylene before as well as during or after extrusion. For example, a chemical blowing agent (e.g. azodicarbonamide) can be added or a physical blowing agent (e.g. a gas like nitrogen, carbon dioxide, butane, or isobutane) can be injected into an extruder in order to produce foamed polypropylene. A chemical blowing agent is preferably added before or after extrusion; a physical blowing agent is preferably injected during or after the extrusion.

The HMS-PP may be further processed as known to one of ordinary skill in the art. It may be formed directly into a desired end product, it may be processed using an underwater pelletizer, or it may be purified, modified, moulded, or blended with miscible amounts of other (polymer) materials, such as EPM, EPDM, and/or LDPE. Thus, there may be modifications using another polymer or monomer in order to enhance the end product's compatibility with other materials.

Alternatively, the HMS-PP may be degraded to increase its processability and/or applicability or may be further processed by, for example, foaming, foam moulding, injection moulding, blow moulding, extrusion coating, profile extrusion, cast film extrusion, blown film extrusion, and/or thermoforming.

It is noted that various elements of the present invention, including but not limited to preferred ranges for the various parameters, can be combined unless they are mutually exclusive.

### Worked Examples

The invention will be elucidated by the following examples without being limited thereto or thereby.

### Melt Flow Index

The melt flow index (MFI) was measured with a Goettfert Melt Indexer MI-3 according to ISO 1133 (230°C/2.16 kg load). The MFI is expressed in g/10 min.

### Melt Strength

The melt strength (MS) was measured (in cN) with a Goettfert Rheograph 20 (capillary rheometer) in combination with a Goettfert Rheotens 71.97, according to the manufacturer's instructions using the following configuration and settings:
Rheograph:
   - Temperature: 220°C
   - Melting time: 10 minutes
   - Die: capillary, length 30 mm, diameter 2 mm
   - Barrel chamber and piston: diameter 15 mm
   - Piston speed: 0.32 mm/s, corresponding to a shear rate of 72 s⁻¹
   - Melt strand speed (at start): 20 mm/s
Rheotens:
   - Acceleration of wheels (strand): 10 mm/s²
   - Barrel to mid-wheel distance: 100 mm
   - Strand length: 70 mm

### Example 1 (Comparative - no water retaining agent)

500 g of polypropylene homopolymer (PP) powder, organic peroxide formulation, and 0.5 g (0.1 phr) Irganox^{®} 1010 antioxidant, were mixed in a bucket with a spatula, and subsequently in a bucket mixer for 10 min. The organic peroxide formulation was added in amounts corresponding to the wt.% pure peroxide set out in Table 1.

The following organic peroxide formulations were used:
- Dibenzoyl peroxide, 75% with water (Perkadox^{®} L-W75, Nouryon^{®})
- Di(para-methylbenzoyl) peroxide, 75% with water (Perkadox^{®} PM-W75, Nouryon^{®})

The compounds were extruded on a Haake PolyLab OS RheoDrive 7 system fitted with a Haake Rheomex OS PTW16 extruder (co-rotating twin-screw, L/D=40), from Thermo Scientific, using following settings:
- Temperature profile settings: hopper at 30°C, zone 1 at 160°C, zones 2-4 at 190°C, zones 5-6 at 200°C, zones 7-10 at 210°C.
- Screw speed: 280 rpm.
- Throughput: 1.2 kg/h, dosed by a Brabender gravimetric screw feeder type DDW-MD2-DSR28-10.
- Nitrogen was purged at the hopper (3.5 L/min) and the die (9 L/min).

The extruded material was led through a water bath for cooling and the cooled strands were granulated by an automatic granulator.

Melt Flow Index (MFI) and Melt Strength (MS) are directly linked to the molecular weight and long-chain branching of the resulting polypropylene structure. A higher MFI signifies polypropylene degradation by chain scission, while a lower MFI is representative of advantageous long-chain branches, which in turn, lead to an increase in MS. The melt-flow index (MFI) and melt strength (MS) of the extruded HMS-PP compounds were analysed as described below. The results are listed in Table 1.

**Table 1**

| | | **Air atmosphere** | | **Inert atmosphere** | |
|---|---|---|---|---|---|
| | **Peroxide (wt%)** | **Melt Flow Index (g/10 min)** | **Melt Strength (cN)** | **Melt Flow Index (g/10 min** | **Melt Strength (cN)** |
| PP unmodified | 0 | 7.3 | <1 | 5.6 | <1 |
| PP modified with Perkadox L* | 1 | 10 | <1 | 5.6 | 4.3 |
| PP modified with Perkadox PM* | 1 | 6.1 | 5.8 | 4.1 | 6.8 |
| PP modified with Perkadox L* | 2 | 6.2 | 4.8 | 2.9 | 8 |
| PP modified with Perkadox PM* | 2 | 2.8 | 7.5 | 1.1 | 14 |

| | | | | | |
|---|---|---|---|---|---|
| L*: Perkadox^{®} L-W75 PM*: Perkadox^{®} PM-W75 | | | | | |

From the above results it can be seen that the use of an air atmosphere increases polypropylene degradation (higher MFI) and reduces melt strength compared to the use of an inert atmosphere.

It can also be seen that the best results are achieved when using 1 or 2 wt% Perkadox PM-W75, i.e., di(para-methylbenzoyl)peroxide [di(4-methylbenzoyl)peroxide] (PTP), in an inert atmosphere, rather than using Perkadox L-W75, i.e., dibenzoyl peroxide (BPO).

### Example 2

An organic peroxide composition in solid form in accordance with the present disclosure was prepared as follows.

Step 1: The following components were added successively to a 50L Lödige mixer and mixed for 10 minutes at 60rpm: 4.5 kg of Di(para-methylbenzoyl) peroxide (75% with water, Perkadox^{®} PM-W75), 0.9 kg of Irganox^{®} 1010 (phenolic antioxidant), 0.9 kg Irgafos 168 (phosphite antioxidant), 1.2 kg of DHT-4V (an aluminum magnesium hydroxide carbonate hydrotalcite available from Kisuma Chemicals), then 4.5 kg of Di(para-methylbenzoyl) peroxide (75% with water, Perkadox^{®} PM-W75).

Step 2: 500g batches of the obtained mixture (from step 1) were compacted using an Alexanderwerk WP50 N/75 compactor with the following compactor settings: Pressure 40 bar, feeder on 7.0, rollers on 1.0.

Step 3: The compacted product (from step 2) was granulated using a Frewitt GLA ORV granulator with a 6mm sieve installed.

Step 4: The granulated product (from step 3) was sieved using a Retsch AS 450 sieving apparatus installed with a 3.15 mm sieve and a 1.0 mm sieve. The granulated product was first sieved using the 3.15mm sieve followed by the 1.0 mm sieve. Fines (<1 mm) were returned to the compactor. The final product recovered from the sieves was in the form of solid flakes.

Based on the solid powders mixed in step 1, the solid flakes had the following approximate composition:

| **Component** | **Wt. % (relative to total weight of flake)** |
|---|---|
| Di(para-methylbenzoyl) peroxide | 56 |
| Water | 19 |
| Irganox^{®} 1010 | 7.5 |
| Irgafos 168 | 7.5 |
| Hydrotalcite | 10 |

### Example 3

In this example, polypropylene homopolymer (PP) powder and the solid flakes of Example 2 were separately dosed to a twin-screw extruder. Two ways of feeding were applied:
- in a closed setup of the hopper under nitrogen purge (at 5 liter/minute) with 1-cm opening for gas release ("inert atmosphere")
- in an open setup into a funnel under air ("air atmosphere")

The compounds were extruded on a Coperion W&P ZSK30 twin-screw extruder (co-rotating twin-screw, UD=36) using following settings:
- Throughput PP: 9.75 kg/h, dosed by a Ktron loss-in-weight feeder
- Throughput organic peroxide formulation: 0.25 kg/h, dosed by a Plasticolor 1500 single screw feeder (volumetric), placed on a balance to record the dosing rate in kg/h
- Temperature profile settings: hopper at 20°C, zone 1 at 160°C, zones 2-3 at 190°C, zone 4 at 200°C, zones 5-6 at 210°C (zone 6=die)
- Screw speed: 300 rpm
- Vacuum degassing was applied at approx. -0.8 bar

The extruded material was led through a water bath for cooling and the cooled strands were granulated by an automatic granulator.

As a comparison to show the beneficial effect of water in the flakes, a batch of flakes of Example 2 without water was also tested (i.e., water was deliberately removed from the flakes of Example 2 by intentionally drying the flakes prior to testing). The results are shown in Table 2.

**Table 2**

| | | **Air atmosphere** | | **Inert atmosphere** | |
|---|---|---|---|---|---|
| | **Peroxide (wt%)** | **Melt Flow Index (g/10 min)** | **Melt Strength (cN)** | **Melt Flow Index (g/10 min** | **Melt Strength (cN)** |
| PP unmodified* | 0 | 5.6 | 2 | 5.0 | 2 |
| PP modified with Example 2 | 1.3 | -- | -- | 2.8 | 13.5 |
| PP modified with Example 2 | 1.4 | 2.6 | 16 | -- | -- |
| PP modified with Example 2 [no water - Comparative] | 1.4 | -- | -- | 3.0 | 15 |
| PP modified with Example 2 [no water - Comparative]* | 1.3 | 4.7 | 11 | -- | -- |

| | | | | | |
|---|---|---|---|---|---|
| ** PP product produced under air atmosphere had* a *visibly yellow colour* | | | | | |

The above results clearly demonstrate the efficacy of the organic peroxide composition of the present disclosure. The polypropylene product that was produced under an air atmosphere had essentially the same technical properties as the product that was produced under an inert atmosphere (i.e., the air atmosphere did not affect the performance of the peroxide composition). The flakes without water, however, showed a notable loss of performance under an air atmosphere (polypropylene degradation, product yellowing, and lower melt strength).

Thus, to summarize the above:
- Comparative Example 1 - organic peroxides with water, but with no water retaining agent, demonstrate a notable loss of performance under an air atmosphere.
- Comparative Example 3 - organic peroxides with water retaining agent, but with no water, demonstrate a notable loss of performance under an air atmosphere.
- Inventive Example 3 - organic peroxides with water retaining agent **and** water demonstrate **no** notable loss of performance under an air atmosphere.

It can be concluded from these results that the water and water retaining agent are acting in synergy to produce the substantially improved technical outcome.

### Example 4

Example 3 was repeated using a polypropylene random copolymer instead of a polypropylene homopolymer. A sample of the fines (from step 4 of Example 2) was also tested, by preparing a premixture with the PP powder in a tumble mixer (concrete mill) upfront and dosing this premix via the Ktron feeder at 10 kg/h. The results are set out in Table 3 and corroborate the above conclusions.

**Table 3**

| | | **Air atmosphere** | | **Inert atmosphere** | |
|---|---|---|---|---|---|
| | **Peroxide (wt%)** | **Melt Flow Index (g/10 min)** | **Melt Strength (cN)** | **Melt Flow Index (g/10 min)** | **Melt Strength (cN)** |
| PP unmodified | 0 | 4.0 | <1 | 3.4 | 1 |
| PP modified with Example 2 | 1.5 | 0.8 | 20 | 0.8 | 20 |
| PP modified with fines (Example 2) | 1.5 | 0.5 | 22 | 1.1 | 21 |

### Example 5 - Water Retaining Test

The following solid compositions were prepared by mixing the following ingredients: 80 parts by weight (pbw) di(para-methylbenzoyl) peroxide (75% with water, Perkadox^{®} PM-W75), 7.5 pbw Irganox^{®} 1010 (phenolic antioxidant), 7.5 pbw Irgafos 168 (phosphite antioxidant), and 5 pbw water retaining agent. The resulting solid compositions contained the following components in the stated amounts:

| **Component** | **Wt. % (relative to total weight)** |
|---|---|
| Di(para-methylbenzoyl) peroxide | 60 |
| Water | 20 |
| Irganox^{®} 1010* | 7.5 |
| Irgafos 168⁺ | 7.5 |
| Water Retaining Agent | 5 |

Each solid composition was compacted on a pelletizing press (Herzog HTP 40; Diameter press chamber: 25 mm; Intake product: 10.0 g; Pressure: 20 ± 5 kN (0.4 ± 0.1 ton/cm²)) and the water lost (i.e., the water pressed out of the tablets by the press under these test conditions) was determined (i.e., % water loss was calculated based on the weight difference of the powder mixture prior to pressing and the tablet after pressing). The water loss is reported as a % of the original water content. For example, a weight loss of 1 g (i.e., final weight of 9g) equates to a loss of 50% of the original water content (20 wt.% of 10g = 2g water, hence 1g water pressed out of the tablet = 50% water loss).

The following agents were tested for their water retaining ability:
- Calcium Stearate
- Lankroflex E2307 (an epoxidized soybean oil)
- DHT-4V (an aluminum magnesium hydroxide carbonate hydrotalcite available from Kisuma Chemicals)

The results are shown in the Table 4 below.

**Table 4**

| **Agent** | **Water loss (%)** |
|---|---|
| Calcium Stearate | >50 |
| Lankroflex E2307 | 50 |
| DHT-4V | 15 |

In the context of the present disclosure, acceptable water retaining agents suitable for use in the compositions disclosed herein are those agents which cause the composition to retain 60% or more of the original water content when the composition comprising said agent is subjected to the above specific testing conditions (i.e., the water loss is 40% or less relative to the original water content). Preferred water retaining agents are those which cause the composition to retain 80% or more of the original water content when subjected to the above testing conditions.

### Example 6

As noted above, when the preferred organic peroxide formulations used in WO 2019/038244 are dosed to an extruder, there is always the potential for unintended spillage of the formulation onto the extruder apparatus. Should that happen, then the water (phlegmatizer) will quickly evaporate, thereby increasing the concentration of the peroxide to the point where the peroxide can become friction and impact sensitive. In the event of that happening, the chance of explosion is significantly increased, which is clearly something to be avoided (especially on an industrial scale). This issue makes handling such organic peroxide formulations somewhat hazardous and challenging. The organic peroxide composition disclosed herein was found to be much safer and easier to handle than the preferred organic peroxide formulations of WO 2019/038244. This finding was based on the following thermal explosion and impact sensitivity safety testing that compared the peroxide compositions of Example 2 against the preferred organic peroxide formulations of WO 2019/038244.

### Compositions Tested

- Peroxide composition of Example 2
- Peroxide composition of Example 2 dried (to simulate spillage and evaporation of the water contained in the composition)
- Perkadox PM-W75 (preferred organic peroxide formulation of WO 2019/038244)
- Perkadox PM-W75 dried (to simulate spillage and evaporation of the water contained in the formulation)

### Safety Test Methods:

### Thermal explosion: Pressure Vessel Test (PVT)

Criteria: Violent - limiting diameter ≥ 9 mm
   Medium - limiting diameter ≥ 3.5 mm and < 9 mm
   Low - limiting diameter ≥ 1 mm and < 3.5 mm
   No - limiting diameter < 1 mm
Reference: UN Manual of Tests and Criteria, 7th revised edition, 2019, Test method E.2
Impact sensitivity: BAM Fallhammer
   Criteria: Very high - impact sensitivity ≤ 2 J
   High - impact sensitivity > 2 J and ≤ 7.5 J
   Medium - impact sensitivity > 7.5 J and ≤ 40 J
   Low - impact sensitivity > 40 J
Reference: UN Manual of Tests and Criteria, 7th revised edition, 2019, Test method 3 (a) (ii)

### Results

The safety test results are shown in Table 5 below:

**Table 5**

| | **Example 2** | **Example 2 [dry]** | **Perkadox PM-W75** | **Perkadox PM-W75 [dry]** |
|---|---|---|---|---|
| Thermal explosion | No | Low | Low | Violent |
| Impact sensitivity | Low | Low | Low | High |

These results show that the organic peroxide composition of the present disclosure is safer than Perkadox PM-W75 (no thermal explosion), and much safer than Perkadox PM-W75 in a situation of drying out (e.g., accidental spill near or on the extruder).

In view of the much-improved air-atmosphere performance and much-improved safety profile, the organic peroxide composition disclosed herein is an excellent candidate for use in polyolefin plastic recycling.

In this specification, unless expressly otherwise indicated, the word 'or' is used in the sense of an operator that returns a true value when either or both of the stated conditions is met, as opposed to the operator 'exclusive or' which requires that only one of the conditions is met. The word 'comprising' is used in the sense of 'including' rather than to mean 'consisting of'. All prior teachings acknowledged above are hereby incorporated by reference. No acknowledgement of any prior published document herein should be taken to be an admission or representation that the teaching thereof was common general knowledge in Europe or elsewhere at the date hereof.

## Claims

1. An organic peroxide composition in solid form comprising
a) at least one organic peroxide of the formula 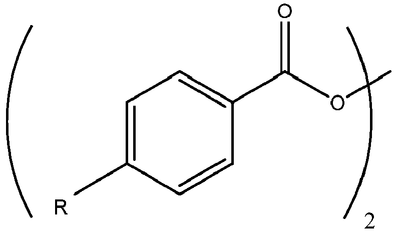 wherein each R is individually selected from C₁₋₅ alkyl groups;
b) at least one water retaining agent that is a solid at room temperature; and
c) water.

2. The organic peroxide composition of claim 1, wherein each R is individually selected from methyl, ethyl, n- propyl, i-propyl, n-butyl, sec-butyl, tert-butyl, and tert-amyl.

3. The organic peroxide composition of claims 1 or 2, wherein the at least one organic peroxide is di(para-methylbenzoyl) peroxide.

4. The organic peroxide composition of any one of claims 1 to 3, wherein organic peroxide composition comprises from 40-75 wt.%, preferably from 45-70 wt.%, more preferably from 50-65 wt.% of the at least one organic peroxide a) (wt.% based on the total weight of the organic peroxide composition).

5. The organic peroxide composition of any one of claims 1 to 4, wherein the at least one water retaining agent comprises one or more anionic clays.

6. The organic peroxide composition of claim 5, wherein the one or more anionic clays is a hydrotalcite.

7. The organic peroxide composition of any one of claims 1 to 6, wherein the organic peroxide composition comprises from 1-30 wt.%, preferably from 3-20 wt.%, more preferably from 5-15 wt.% of the at least one water retaining agent b) (wt.% based on the total weight of the organic peroxide composition).

8. The organic peroxide composition of any one of claims 1 to 7, wherein the organic peroxide composition comprises from 5-30 wt.%, preferably from 10-25 wt.%, more preferably from 15-20 wt.% water (wt.% based on the total weight of the organic peroxide composition).

9. The organic peroxide composition of any one of claims 1 to 8, further comprising one or more stabilizers, preferably in an amount of from 5-20 wt.% (wt.% based on the total weight of the organic peroxide composition).

10. The organic peroxide composition of claim 9, wherein the one or more stabilizers comprises or consists of one or more antioxidants.

11. A process for enhancing the melt strength of polypropylene by extruding said polypropylene in an extruder, at a temperature between 150°C and 300°C, and in the presence of an organic peroxide composition according to any one of claims 1 to 10.

12. The process of claim 11, wherein the organic peroxide composition is added to the polypropylene prior to or during extrusion.

13. The process of claims 11 or 12, wherein the amount of organic peroxide composition used is such that the concentration of the at least one organic peroxide a) is in the range of 0.1 to 5.0 g of peroxide per 100 g polypropylene, more preferably in the range of 0.5 to 3.0 g per 100 g polypropylene.

14. The process of any one of claims 11 to 13, wherein the polypropylene is a homopolymer of propylene or a random, alternating, heterophasic, or block co- or terpolymer of propylene and other olefins.

15. Use of an organic peroxide composition according to any one of claims 1 to 10 for increasing the melt strength of polypropylene and/or as an additive for polyolefin plastic recycling.
